# EUROPEAN PATENT APPLICATION

(11) **EP 1 814 325 A1**
(43) Date of publication of application: **01.08.2007**
(21) Application number: 05793107.3
(22) Date of filing: 14.10.2005
(51) Int. Cl.: H04N 5/76, G11B 20/10, G11B 27/00, G11B 33/10, G06F 3/048

(54) **RESERVED RECORD DISPLAY SYSTEM, RESERVED RECORD DISPLAY DEVICE, RESERVED RECORD DISPLAY METHOD, PROGRAM, AND RECORDING MEDIUM**

(30) Priority: 18.10.2004 JP 2004303071
(71) Applicant: MATSUSHITA ELECTRIC INDUSTRIAL CO., LTD., Osaka 571-8501 (JP)
(72) Inventor: HORI, Masatomo, c/o Mats. El. Ind. Co., Ltd., IPROC, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/018969
(87) International publication number: WO 2006/043484

(57) **Abstract**

For example, when a plurality of home network-compatible timer recording appliances are used for timer recording, it has been disadvantageously not easy to determine which home appliances are to cooperate in the timer recording. The present invention provides a timer recording system including a PVR 2 having a unique UUID and executing timer recording of a program set, an STB 1 having a unique UUID and holding a timer recording entry in a timer recording entry saving section 8a, the timer recording entry describing at least the UUID of the PVR 2 controlled by the STB 1 and timer recording information for executing the timer recording of the set program, the STB 1 controlling the PVR 2 on the basis of the timer recording entry held by the STB 1, and a PC 3 that provides display for a combination of the UUID of the PVR 2 executing the timer recording of the set program, the UUID of the STB 1 controlling the PVR 2 executing the timer recording, and the timer recording information for executing the timer recording of the set program.

## Description

### Technical Field

The present invention relates to a timer recording display system, a timer recording display device, a timer recording display method, a program, and a recording medium which can be utilized for timer recording using a plurality of home network-compatible timer recording appliances.

### Background Art

A protocol called Universal Plug and Play (hereinafter referred to as UPnP) has been standardized to enable detection and control of appliances coupled to a network (see, for example, Japanese Patent Laid-Open No. 2004-228849, and Microsoft Corporation, "Universal Plug and Play Device Architecture", [online], UPnP Forum, 10:41 a.m., June 8, 2000, [searched on August 24, 2004], Version 1.0, Internet <URL:http://www.upnp.org/download/UPnPDA10_20000613. htm>) . The entire disclosure of Japanese Patent Laid-Open No. 2004-228849 and "Universal Plug and Play Device Architecture" is incorporated herein by reference in its entirety.
The UPnP uses the standard TCP/IP and Internet Protocol to implement, for example, functions for allowing a device to obtain information on the presence and functions of other devices and notifying these devices of its own functions. This enables peripheral appliances to be easily set up, set, and added.

The basic components of a UPnP network are devices, services, and control points.

The UPnP devices are appliances that store services, the minimum units of control. For example, a VTR device can be expressed to comprise a tape feed service, a tuner service, and a clock service. The control points are each a controller that can detect and control other devices.

A UPnP device to be newly coupled to a network first acquires an address required to join the network.

A DHCP server automatically assigns an address to a DHCP client held by each device.

The new device to which the address is assigned becomes communicable and multicasts (UDP) GENA advertisements for the device and its service to announce its presence. The device also does a detection message that advertises the service.

The advertisement needs to be retransmitted before it is expired.

Further, the device transmits a message clearly indicating exit before going offline.

Each control point on the network has the ability to multicast an SSDP detection message to search for associated devices and services (M-search).

A search message is in the form of an SSDP request transmitted using HTTPMU and contains the type or ID of a device or service which is defined by the UPnP Steering Committee or which is unique to a vender.

It is necessary that all devices listen to the standard multicast address of the message to make response indicating whether or not the service of the device matches a search criterion for the detection message.

The response to the search request is transmitted to the IP address of the control point having started the search, using a unicast UDP with an SSDP header.

For example, if the control point is a video control application, it can search for a device acting as a server for AV contents to display all video devices on the network so that a DVD player can be selected.

The response to the received search request contains a URL that allows a device description to be acquired.

To acquire a UPnP device description, the control point issues an HTTP GET request to the URL in the detection message. The device returns the device description.

The device description includes not only information on a service set provided by that device type but also device-related properties such as a device name and an icon which are listed in an XML form.

A pointer (URL) to a service description is contained in the device description document. The service description can be acquired in the same manner as that in which the device description is acquired.

The service description is an XML document containing information on the service provided by the device.

Specifically, the UPnP Steering Committee has defined a contents directory service for displaying a list of AV contents, an AV transport service for controlling AV streaming, and the like.

Besides the services defined by the UPnP Steering Committee, vendor-specific services can be provided.

PVRs that can be coupled to networks have been commercialized in recent years.

Further, in addition to the conventional terrestrial analog broadcasting, satellite digital broadcasting such as BS and CS, cable broadcasting, and terrestrial digital broadcasting have gotten into full swing; the broadcasting form has been diversified.

Under these circumstances, programs that a user desires to subject to timer recording cannot be received by a tuner contained in a PVR. This results in the need to execute timer recording of outputs from a separate dedicated set top box.

However, when a plurality of home network-compatible timer recording appliances are used for timer recording, it is disadvantageously not easy to determine which home appliances are to cooperate in the timer recording.

In view of these conventional problems, it is an object of the present invention to provide a timer recording display system, a timer recording display device, a timer recording display method, a program, and a recording medium which, when a plurality of home network-compatible timer recording appliances are used for timer recording, allows the easy determination of which home appliances are to cooperate in the timer recording.

### Disclosure of the Invention

The 1st aspect of the present invention is a timer recording display system comprising:
one or more recording devices coupled to a predetermined network, the recording devices having respective unique recording device identifiers and each executing a timer recording of a program set in accordance with an external instruction;
one or more recording control devices coupled to the predetermined network, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device; and
a display device coupled to the predetermined network, the display device providing display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

The 2nd aspect of the present invention is the timer recording display system according to the 1st aspect of the present invention, wherein the display device utilizes the predetermined network to view at least the recording control device timer recording entry to provide the display.

The 3rd aspect of the present invention is the timer recording display system according to the 1st aspect of the present invention, wherein the recording control device identifier of the recording control device controlling the recording device, which executes the timer recording when the timer recording of the set program is executed and the timer recording information for executing the timer recording of the set program are communicated to the recording device executing the timer recording of the set program using the predetermined network, and
the recording device holds a recording device timer recording entry in a predetermined recording device timer recording entry memory, the recording device timer recording entry describing at least the communicated recording control device identifier of the recording control device controlling the recording device when the timer recording of the set program is executed and the communicated timer recording information for executing the timer recording of the set program.

The 4th aspect of the present invention is the timer recording display system according to the 3rd aspect of the present invention, wherein the display device utilizes the predetermined network to view at least the recording device timer recording entry to provide the display.

The 5th aspect of the present invention is the timer recording display system according to the 4th aspect of the present invention, wherein the predetermined network allows UPnP to be used therein,
the recording device identifier is a UUID of the recording device,
the recording control device identifier is a UUID of the recording control device, and
an object ID for the recording device which is unique to the recording device and an object ID for the recording control device which is unique to the recording control device are assigned to the set program.

The 6th aspect of the timer recording display system according to the 5th aspect of the present invention, wherein after the UUID of the recording control device controlling the recording device, which executes the timer recording when the timer recording of the set program is executed, is communicated to the recording device executing the timer recording of the set program, together with the object ID for the recording control device assigned to the set program,
at the recording device, the recording device timer recording entry is generated by adding the communicated object ID for the recording control device, and
at the recording control device, the object ID for the recording device assigned to the set program is communicated, and the recording control device timer recording entry is generated by adding the communicated object ID for the recording device.

The 7th aspect of the present invention is the timer recording display system according to the 5th aspect of the present invention, wherein before the UUID of the recording control device controlling the recording device, which executes the timer recording when the timer recording of the set program is executed, is communicated to the recording device executing the timer recording of the set program,
at the recording control device, the recording control device timer recording entry is once generated, and
after the UUID of the recording control device controlling the recording device, which executes the timer recording when the timer recording of the set program is executed, is communicated to the recording device executing the timer recording of the set program, together with the object ID for the recording control device assigned to the set program,
at the recording device, the recording device timer recording entry is generated by adding the communicated object ID for the recording control device, and
at the recording control device, the object ID for the recording device assigned to the set program is communicated, and the communicated object ID for the recording device is added to the recording control device timer recording entry once generated.

The 8th aspect of the present invention is the timer recording display system according to the 1st aspect of the present invention, further comprising a setting device that sets the timer recording of the program in accordance with at least the external instruction.

The 9th aspect of the present invention is the timer recording display system according to the 1st aspect of the present invention, wherein the display device utilizes a matrix table having both a coordinate for the recording device and the recording control device and a coordinate for the program, to provide the display.

The 10th aspect of the present invention is the timer recording display system according to the 1st aspect of the present invention, wherein the timer recording information has data on a timer recording time during which the timer recording of the program is executed, and
the display device utilizes a bar graph on a coordinate plane having both a coordinate for the recording device and the recording control device and a coordinate for the timer recording time, to be displayed.

The 11th aspect of the present invention is the timer recording display system according to the 10th aspect of the present invention, wherein the bar graph has bars shown in common colors and/or with common patterns for respective programs to be subjected to the timer recording, each of the bars having a length in a direction of the coordinate for the timer recording time.

The 12th aspect of the present invention is a timer recording display device coupled to a predetermined network to which one or more recording devices and one or more recording control devices are coupled, the recording devices having respective unique recording device identifiers and each executing timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, the timer recording display device comprising a display instrument which provides display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

The 13th aspect of the present invention is a timer recording display method comprising a display step of utilizing a predetermined network to which one or more recording devices and one or more recording control devices are coupled, the recording devices having respective unique recording device identifiers and each executing timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, to provide display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

The 14th aspect of the present invention is a program for allowing a computer to execute the display step of the timer recording display method according to the 13th aspect of the present invention, the display step utilizing a predetermined network to which one or more recording devices and one or more recording control devices are coupled, the recording devices having respective unique recording device identifiers and each executing timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, to provide display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

The 15th aspect of the present invention is a recording medium carrying the program according to the 14th aspect of the present invention, which can be processed by a computer.

The present invention has the advantage of, when a plurality of home network-compatible timer recording appliances are used for timer recording, allowing the easy determination of which home appliances are to cooperate in the timer recording.

### Brief Description of the Drawings

Figure 1 is a block diagram of a timer recording system in accordance with Embodiment 1 of the present invention;
Figure 2 is a diagram illustrating the operation of the timer recording system in accordance with Embodiment 1 of the present invention;
Figure 3 is a diagram illustrating the display of a timer recording list provided by the timer recording system in accordance with Embodiment 1 of the present invention;
Figure 4 is a diagram illustrating the operation of a timer recording system in accordance with Embodiment 2 of the present invention;
Figure 5 is a block diagram of a timer recording system in accordance with Embodiment 3 of the present invention;
Figure 6 is a diagram illustrating the operation of the timer recording system in accordance with Embodiment 3 of the present invention;
Figure 7 is a block diagram of a timer recording system in accordance with Embodiment 4 of the present invention;
Figure 8 is a diagram illustrating the display of a timer recording list provided by the timer recording system in accordance with Embodiment 4 of the present invention;
Figure 9 is a diagram illustrating the display of a timer recording list in a timer recording system in accordance with Embodiment 5 of the present invention;
Figure 10 is a diagram illustrating first timer recording information set for an STB 1 in the timer recording system in accordance with Embodiment 1 of the present invention;
Figure 11 is a diagram illustrating second timer recording information set for a PVR 2 in the timer recording system in accordance with Embodiment 1 of the present invention;
Figure 12 is a diagram illustrating a request for generation of a timer recording entry in the timer recording system in accordance with Embodiment 1 of the present invention;
Figure 13 is a diagram illustrating a second timer recording entry in the timer recording system in accordance with Embodiment 1 of the present invention;
Figure 14 is a diagram illustrating a response to the request for generation of a timer recording entry in the timer recording system in accordance with Embodiment 1 of the present invention;
Figure 15 is a diagram illustrating a first timer recording entry in the timer recording system in accordance with Embodiment 1 of the present invention;
Figure 16 is a diagram illustrating acquisition of a list of timer recording entries in the timer recording system in accordance with Embodiment 1 of the present invention;
Figure 17 is a diagram illustrating acquisition of a list of timer recording entries in the timer recording system in accordance with Embodiment 1 of the present invention;
Figure 18 is a diagram illustrating a request for generation of a timer recording entry in the timer recording system in accordance with Embodiment 3 of the present invention;
Figure 19 is a diagram illustrating a response to the request for generation of a timer recording entry in the timer recording system in accordance with Embodiment 3 of the present invention; and
Figure 20 is a diagram illustrating a request for addition of an identifier to the timer recording entry in the timer recording system in accordance with Embodiment 3 of the present invention.

### Description of Symbols

- 1: STB
- 2: PVR
- 3: PC
- 4: Home network
- 5a: Network interface
- 5b: Network interface
- 5c: Network interface
- 6a: Control point
- 6c: Control point
- 7a: UPnP service
- 7b: UPnP service
- 8a: Timer recording entry saving section
- 8b: Timer recording entry saving section
- 9a: Tuner
- 9b: Tuner
- 10: Recording instrument
- 11a: GUI
- 11c: GUI

### Best Mode for Carrying Out the Invention

Embodiments of the present invention will be described with reference to the drawings.

### (Embodiment 1)

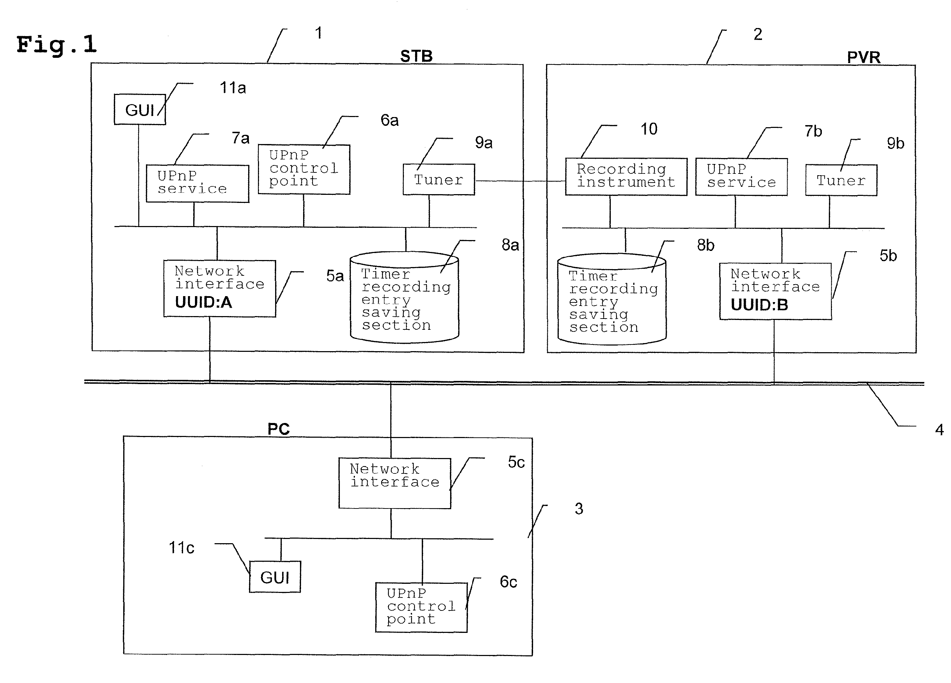

First, with reference mainly to Figure 1, a block diagram of a timer recording system in accordance with Embodiment 1 of the present invention, description will be given of configuration of a timer recording system in accordance with the present embodiment.

Reference numeral 1 denotes a set top box (hereinafter referred to as an STB), and reference numeral 2 denotes a personal video recorder (hereinafter referred to as a PVR) utilizing a hard disk. Reference numeral 3 denotes a personal computer (hereinafter referred to as a PC), and reference numeral 4 denotes a home network. Reference numerals 5a, 5b, and 5c denote network interfaces to which the STB 1, PVR 2, and PC 3, respectively, can be coupled via the home network 4. Reference numerals 6a and 6c denote UPnP control points in accordance with the UPnP which constitute the STB 1 and PC 3. Reference numerals 7a and 7b denote UPnP services that provide timer recording services in accordance with the UPnP. Reference numerals 8a and 8b denote timer recording entry saving sections each having a memory to which a group of timer recording entries, a set of information such as time and a channel used to execute timer recording of one program, is saved. Reference numerals 9a and 9b denote tuners, reference numeral 10 denotes a recording instrument, and reference numerals 11a and 11c denote graphic user interfaces (hereinafter referred to as GUIs).

Thus, the timer recording system in accordance with the present embodiment comprises the PVR 2, STB 1, and PC 3.

Now, a detailed description will be given of configuration of the timer recording system in accordance with the present embodiment.

The PVR 2 is coupled to the home network 4, has its universally unique identifier (hereinafter referred to as a UUID), and executes timer recording of a program set in response to an external instruction.

The STB 1 is coupled to the home network 4 and has its UUID. When the timer recording of the set program is executed, the STB 1 holds, in the timer recording saving section 8a, a timer recording entry describing at least the UUID of the PVR 2 controlled by the STB 1 and timer recording information for executing the timer recording of the set program. The STB 1 further controls the PVR 2 on the basis of its own timer recording entries.

The PC 3 is coupled to the home network 4 and displays a combination of the UUID of the PVR 2, which executes the timer recording of the set program, the UUID of the STB 1, which controls the PVR 2, which, during execution of timer recording of the set program, executes the timer recording, and the timer recording information for executing the timer recording of the set program.

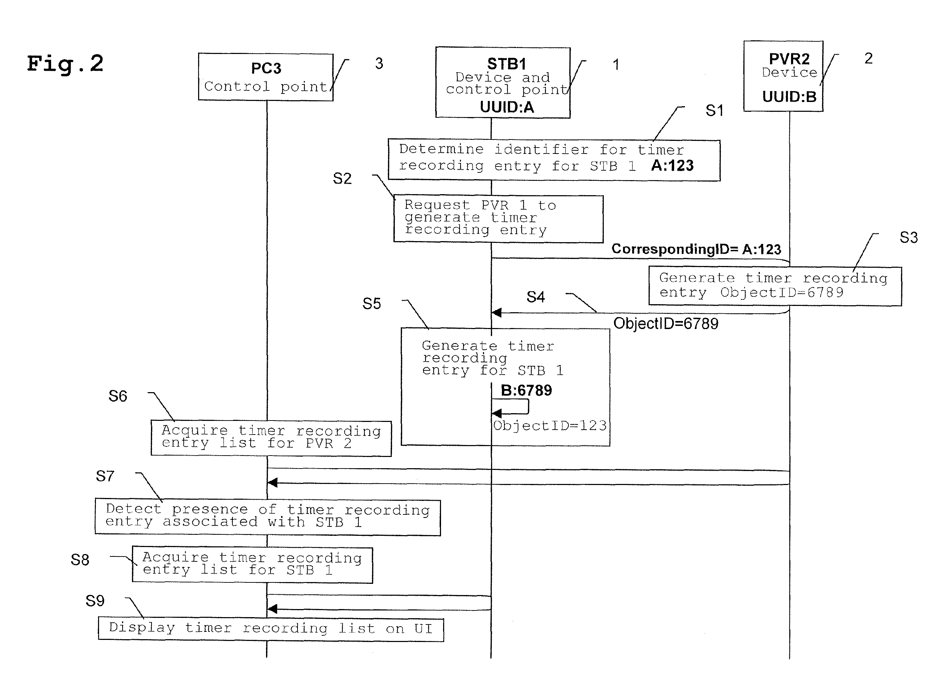

Now, with reference mainly to Figure 2, a diagram illustrating the operation of a timer recording system in accordance with Embodiment 1 of the present invention, description will be give of operation of the timer recording system in accordance with the present embodiment. While describing the operation of the timer recording system in accordance with the present embodiment, description will be given of an embodiment of a timer recording display method in accordance with the present invention (this also applies to the other embodiments).

A user is operating the STB 1 while viewing the GUI 11a. The user is to execute timer recording of a certain broadcast program.

Since this broadcast program is terrestrial digital, it cannot be recorded by means of a built-in tuner 9b in the PVR 2.

Thus, the user decides to input reception outputs from the STB 1 to the PVR 2 for recording.

The user programs the tuner 9a so that the STB 1 starts receiving the broadcast channel of the broadcast program at the time when broadcasting of the broadcast program is started. The reception outputs from the STB 1 are input to the PVR 2 during the broadcast time of the broadcast program. The recording instrument 10 then executes the timer recording.

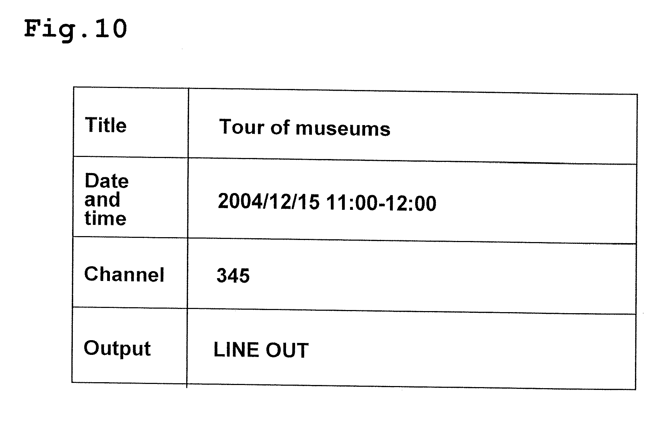

First timer recording information to be set for the STB 1 is shown in Figure 10, a diagram illustrating the first timer recording information to be set for the STB 1 in the timer recording system in accordance with Embodiment 1 of the present invention.

Before generating and laying open a first timer recording entry corresponding to the first timer recording information through the UPnP service 7a, the STB 1 decides a first identifier uniquely indicating the first timer recording entry (step S1 in Figure 2).

The present embodiment uses the pair of an object identifier (hereinafter referred to as an object ID) that is unique within the STB 1 and a UUID that is globally unique, as an identifier. The UUID is generally expressed in 128 bits. However, in the present embodiment, the UUID of the STB 1 is denoted as A for simplification. The object ID is a string also used for the above described contents directory service and is assigned uniquely within the service. In the present embodiment, the object ID is illustrated as a number 123. The above elements combined together by : (colon) into a first identifier = A:123.

Then, the UPnP control point 6a, constituting the STB 1, requests the UPnP service 7b, constituting the PVR 2, to generate a second timer recording entry (step S2 in Figure 2).

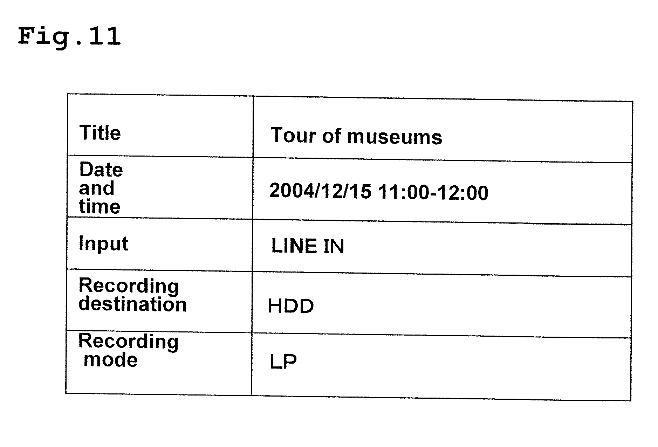

Timer recording information on which the second timer recording entry is based is shown in Figure 11, a diagram illustrating the second timer recording information, which is set for the PVR 2 in the timer recording system in accordance with Embodiment 1 of the present invention. The timer recording information and the time information shown in Figure 10 are the same as those shown in Figure 11.

At the same time, the first identifier = A:123, determined at step S1 in Figure 2, is transmitted to the PVR 2.

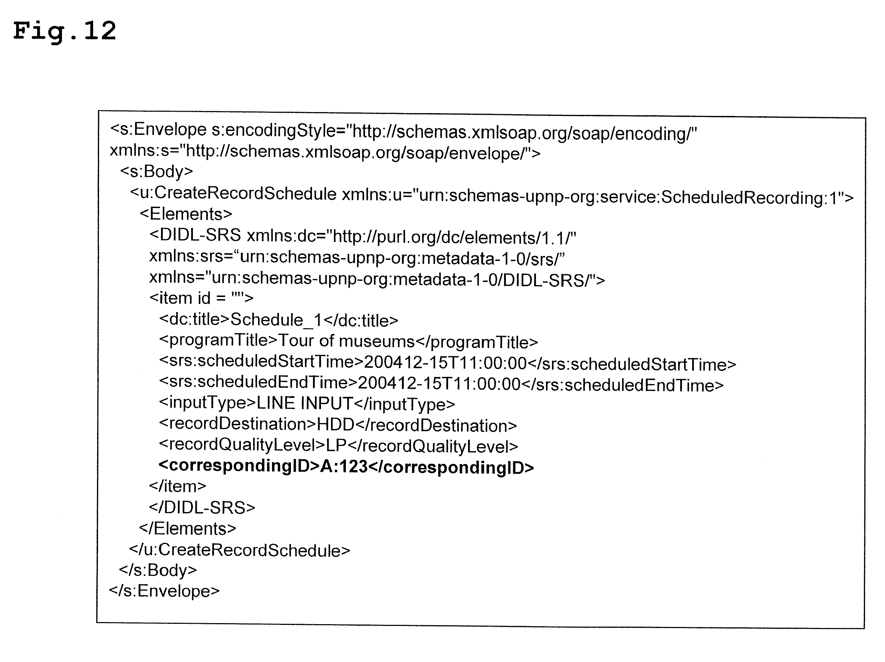

An example of a generation request is shown in Figure 12, a diagram illustrating a request for generation of a timer recording entry in the timer recording system in accordance with Embodiment 1 of the present invention. An XML document representing a second timer recording entry to be generated is stored in an argument for a simple object access protocol (hereinafter referred to as SOAP) action, which is transmitted to the PVR 2, as is the case with a create object SOAP action used for the above described contents directory service. For the actual storage in the argument, XML escape is executed. However, to improve visibility, Figure 12 shows a form prior to the escape. The part <correspondingID>A:123</correspondingID>, shown in boldface, is a tag for transmitting the first identifier.

Upon receiving the generation request, the UPnP service 7b, constituting the PVR 2, generates the second timer recording entry (step S3 in Figure 2). The present embodiment generates the second timer recording entry by adding the object ID to the XML document obtained through the SOAP action. The object ID is unique within the service as described above, and is illustrated as a number 6789 in the present embodiment.

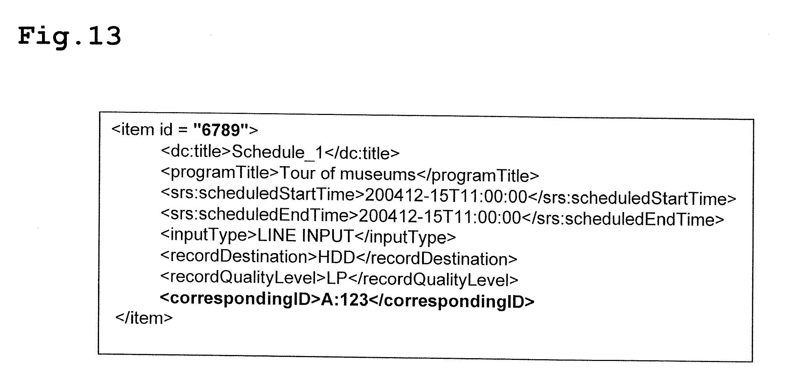

The second timer recording entry generated is shown in Figure 13, a diagram of the second timer recording entry in the timer recording system in accordance with Embodiment 1 of the present invention. The second timer recording entry contains the first identifier A:123. The second timer recording entry generated is saved to the timer recording entry saving section 8b, constituting the PVR 2.

After the generation is completed, the UPnP service 7b, constituting the PVR 2, notifies the UPnP control point 6a, constituting the STB 1, of completion of the generation (step S4 in Figure 2). The notification is executed through an SOAP action. A corresponding response contains the second timer recording entry generated.

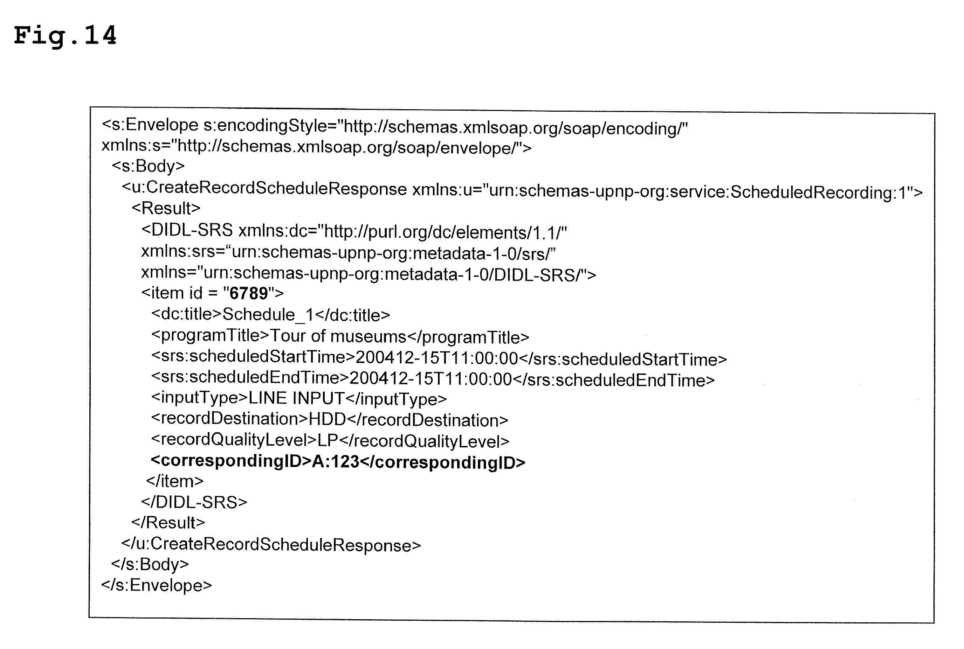

An example of the response is shown in Figure 14, a diagram of the response to the request for generation of a timer recording entry in the timer recording system in accordance with Embodiment 1 of the present invention. For the actual storage in the argument, the XML escape is executed. However, to improve visibility, Figure 14 shows a form prior to the escape.

After receiving the response shown in Figure 14, the UPnP control point 6a, constituting the STB 1, generates a first timer recording entry for its own UPnP service 7a (step S5 in Figure 2). At this time, the UPnP service 7a, constituting the STB 1, uses B, the UUID of the PVR 2, and 6789, the object ID of the second timer recording entry generated for the UPnP service 7b, constituting the PVR 2, to obtain a second identifier = B:6789 and add it to the first timer recording entry.

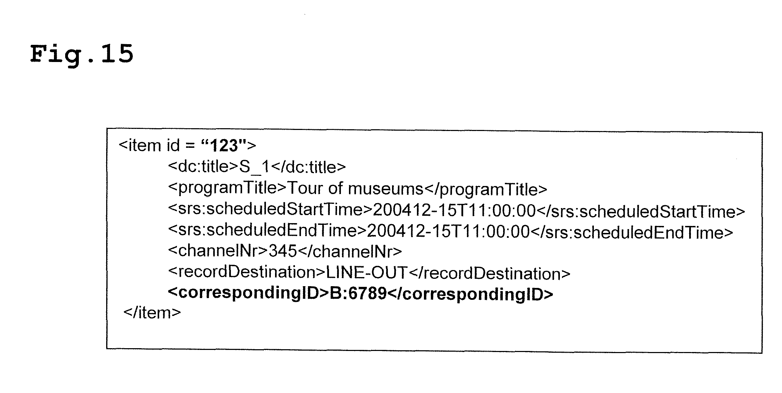

The first timer recording entry generated is shown in Figure 15, a diagram illustrating the first timer recording entry in the timer recording system in accordance with Embodiment 1 of the present invention. The first timer recording entry generated is saved to the timer recording entry saving section 8a, constituting the STB 1.

As described above, the first and second timer recording entries contain the second and first identifiers, respectively.

It is assumed that the user subsequently acquires a list of timer recording information for the PVR 2 from the PC 3 via the home network 4.

The user uses the UPnP control point 6c, constituting the PC 3, to acquire the list of timer recording entries for the UPnP service 7b, constituting the PVR 2 (step S6 in Figure 2).

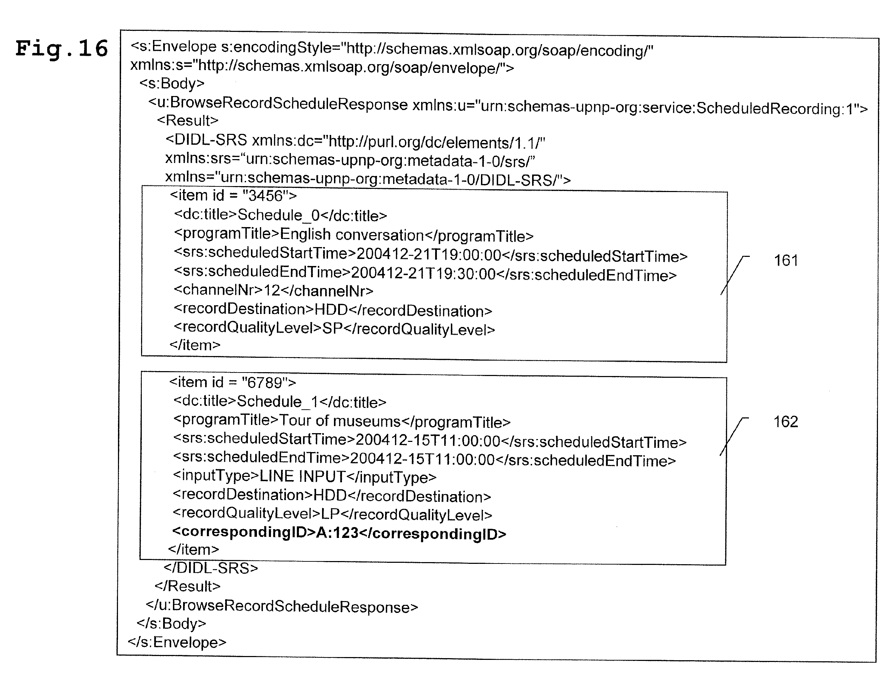

An example of acquisition of the list of timer recording entries is shown in Figure 16, a diagram illustrating the acquisition of the list of timer recording entries in the timer recording system in accordance with Embodiment 1 of the present invention. As is the case with the response to the Browse SOAP action, used for the contents directly service as described above, a group of XML documents representing a group of timer recording entries controlled by the UPnP service 7b is stored in the argument for the SOAP action, which is returned to the UPnP control point 6c. For the actual storage in the argument, the XML escape is executed. However, to improve visibility, Figure 16 shows a form prior to the escape. For simplification, Figure 16 shows two timer recording entries set for the PVR 2, at 161 and 162, respectively. Reference numeral 161 denotes a timer recording entry for timer recording using the tuner 9b, contained in the PVR 2 itself. On the other hand, reference numeral 162 denotes the second timer recording entry, generated in steps S1 to S5, described above, and containing the first identifier A:123.

The UPnP control point 6c, constituting the PC 3, detects that the second timer recording entry, shown at 162, is associated with a timer recording entry for recording using the tuner 9a in the STB 1, having the UUID = A (step S7 in Figure 2).

The UPnP control point 6c, constituting the PC 3, acquires a list of timer recording entries for the STB 1 in order to acquire detailed information on the timer recording entry for the STB 1 which is associated with the second timer recording entry, shown at 162 (step S8 in Figure 2).

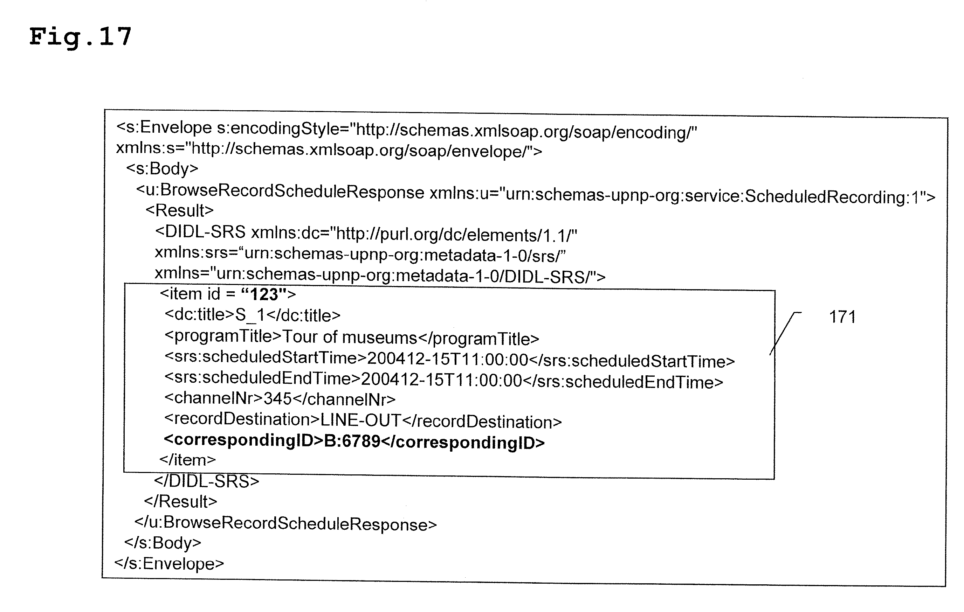

An example of acquisition of the list of timer recording entries is shown in Figure 17, a diagram illustrating the acquisition of the list of timer recording entries in the timer recording system in accordance with Embodiment 1 of the present invention. To improve visibility, Figure 17 shows a form prior to the escape. For simplification, Figure 17 shows one timer recording entry set for the STB 1. In Figure 17, reference numeral 171 denotes the first timer recording entry, generated in steps S1 to S5, described above, and containing the second identifier B:6789.

The UPnP control point 6c, constituting the PC 3, detects that the first timer recording entry, shown at 171, is associated with the second timer recording entry on the PVR 2, having the UUID = B.

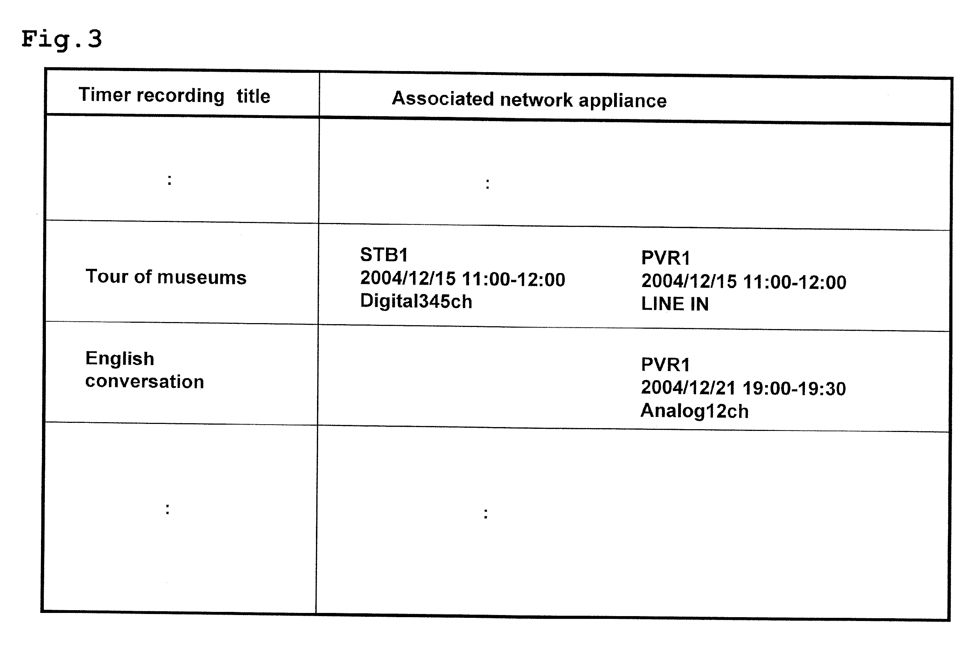

This enables the UPnP control point 6c, constituting the PC 3, to display a timer recording list on the GUI 11c on the basis of the results of steps S6, S7, and S8; an example of the timer recording list is shown in Figure 3, a diagram illustrating the display of a timer recording list provided by the timer recording system in accordance with Embodiment 1 of the present invention (step S9 in Figure 2).

As described above, the present embodiment makes it possible to determine, through the PC 3, the third appliance, that the STB 1 and the PVR 2 are to cooperate in timer recording. The present embodiment is effective in allowing the user to effectively and appropriately control the list of timer recording.

In the present embodiment, the example with the two associated appliances is shown. However, even with three or more associated appliances, a plurality of identifiers may be stored in <correspondingID>, a tag for transmitting identifiers. To store a plurality of identifiers, a comma separated list may be used (this also applies to the other embodiments).

The recording device in accordance with the present invention corresponds to the PVR 2. The recording control device in accordance with the present invention corresponds to the STB 1. The display device in accordance with the present invention corresponds to the PC 3. The timer recording display system in accordance with the present invention corresponds to the timer recording system in accordance with the present embodiment. The display instrument in accordance with the present invention corresponds to the UPnP control point 6c. The timer recording display device in accordance with the present invention corresponds to the PC 3.

### (Embodiment 2)

Now, description will be given of the configuration and operation of a timer recording system in accordance with Embodiment 2.

The configuration of the present embodiment is the same as that of Embodiment 1 (see Figure 1), described above, except for timings for generating timer recording entries.

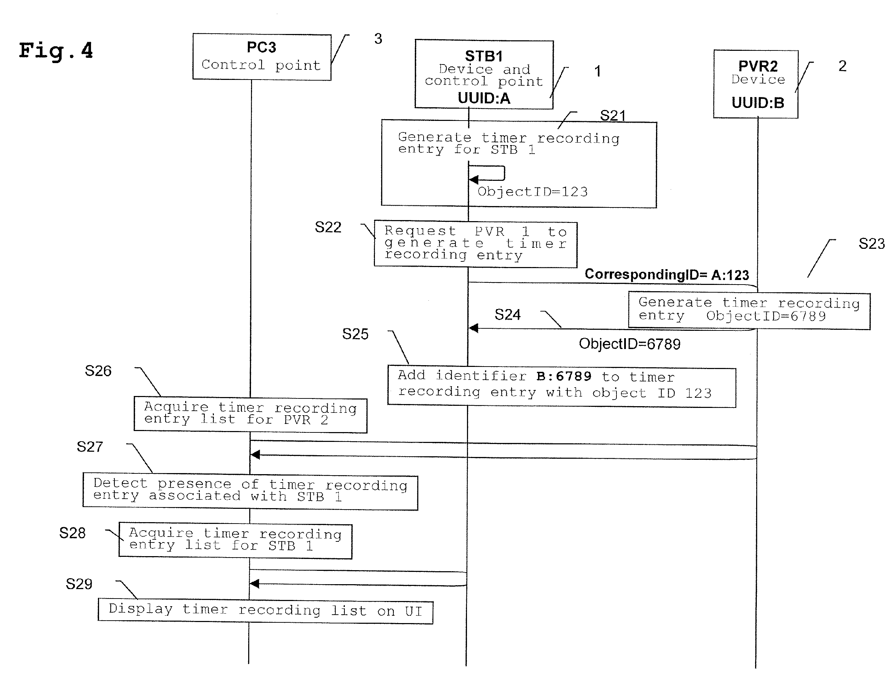

Thus, the operation of the present embodiment will be described with reference mainly to Figure 1 and Figure 4, a diagram illustrating the operation of the timer recording system in accordance with Embodiment 2 of the present invention.

The user is operating the STB 1 while viewing the GUI 11a. The user is to execute timer recording of a certain broadcast program. Since this broadcast program is terrestrial digital, it cannot be recorded by means of the built-in tuner 9b in the PVR 2. Thus, the user decides to input reception outputs from the STB 1 to the PVR 2 for recording. The user programs the tuner 9a so that the STB 1 starts receiving the broadcast channel of the broadcast program at the time when broadcasting of the broadcast program is started. The reception outputs from the STB 1 are input to the PVR 2 during the broadcast time of the broadcast program. The recording instrument 10 then executes the timer recording.

An example of first timer recording information set for the STB 1 in accordance with the present embodiment is similar to that in accordance with Embodiment 1 (see Figure 10).

The UPnP service 7a generates a first timer recording entry corresponding to the first time recording information (step S21 in Figure 4). The present embodiment illustrates an object ID, which is added to the first timer recording entry and is unique within the STB 1, as a number 123. The pair of the object ID and a UUID, which is globally unique, is used as an identifier for the first timer recording entry. The above elements are combined together by : (colon) into a first identifier = A:123. The UUID and the object ID are described in detail in Embodiment 1 and will thus not be described.

Then, the UPnP control point 6a, constituting the STB 1, requests the UPnP service 7b, constituting the PVR 2, to generate a second timer recording entry (step S22 in Figure 4).

An example of the timer recording information on which the second timer recording entry is based in accordance with the present invention is similar to that in accordance with Embodiment 1, described above (see Figure 11). The timer recording information shown in Figure 11 has the same time information as that in the timer recording information shown in Figure 10.

At the same time, the first identifier = A:123, determined at step S21 in Figure 4, is transmitted to the PVR 2.

An example of the generation request in accordance with the present embodiment is similar to that in accordance with Embodiment 1, described above (see Figure 12). An XML document representing a second timer recording entry to be generated is stored in the argument for the SOAP action, which is transmitted to the PVR 2, as is the case with the create object SOAP action used for the above described contents directory service. The part <correspondingID>A:123</correspondingID>, shown in boldface, is a tag for transmitting the first identifier.

Upon receiving the generation request, the UPnP service 7b, constituting the PVR 2, generates the second timer recording entry (step S23 in Figure 4). The present embodiment generates the second timer recording entry by adding the object ID to the XML document obtained through the SOAP action. The object ID is unique within the service as described above, and is illustrated as a number 6789 in the present embodiment.

An example of the second timer recording entry generated in accordance with the present embodiment is similar to that in accordance with Embodiment 1, described above (see Figure 13). The second timer recording entry contains the first identifier A:123.

The second timer recording entry generated is saved to the timer recording entry saving section 8b, constituting the PVR 2.

After the generation is completed, the UPnP service 7b, constituting the PVR 2, notifies the UPnP control point 6a, constituting the STB 1, of completion of the generation (step S24 in Figure 4). The notification is executed through an SOAP action. A corresponding response contains the second timer recording entry generated.

An example of the response in accordance with the present embodiment is similar to that in accordance with Embodiment 1, described above (see Figure 14).

After receiving the response shown in Figure 14, the UPnP control point 6a, constituting the STB 1, adds a second identifier to the first timer recording entry, controlled by its own UPnP service 7a (step S25 in Figure 4). The second identifier B:6789 is obtained by combining, via : (colon), B, the UUID of the PVR 2, and 6789, the object ID of the second timer recording entry generated for the UPnP service 7b, constituting the PVR 2.

As described above, the first and second timer recording entries contain the second and first identifiers, respectively.

It is assumed that the user subsequently acquires a list of timer recording information for the PVR 2 from the PC 3 via the home network 4.

The user uses the UPnP control point 6c, constituting the PC 3, to acquire the list of timer recording entries for the UPnP service 7b, constituting the PVR 2 (step S26 in Figure 4).

An example of acquisition of the list of timer recording entries in accordance with the present embodiment is similar to that in accordance with Embodiment 1, described above (see Figure 16). As is the case with the response to the Browse SOAP action, used for the contents directly service as described above, a group of XML documents representing a group of timer recording entries controlled by the UPnP service 7b is stored in the argument for the SOAP action, which is returned to the UPnP control point 6c.

The UPnP control point 6c, constituting the PC 3, detects that the second timer recording entry, shown at 162, is associated with a timer recording entry for recording using the tuner 9a in the STB 1, having the UUID = A (step S27 in Figure 4).

The UPnP control point 6c, constituting the PC 3, acquires a list of timer recording entries for the STB 1 in order to acquire detailed information on the timer recording entry for the STB 1 which is associated with the second timer recording entry, shown at 162 (step S28 in Figure 4).

An example of acquisition of the list of timer recording entries in accordance with the present embodiment is similar to that in accordance with Embodiment 1, described above (see Figure 17).

The UPnP control point 6c, constituting the PC 3, detects that the first timer recording entry, shown at 171, is associated with the second timer recording entry on the PVR 2, having the UUID = B.

This enables the UPnP control point 6c, constituting the PC 3, to display a timer recording list such as the one shown in Figure 3 on the GUI 11c on the basis of the results of steps S26, S27, and S28 (step S29 in Figure 4).

### (Embodiment 3)

Now, description will be given of configuration and operation of a timer recording system in accordance with Embodiment 3.

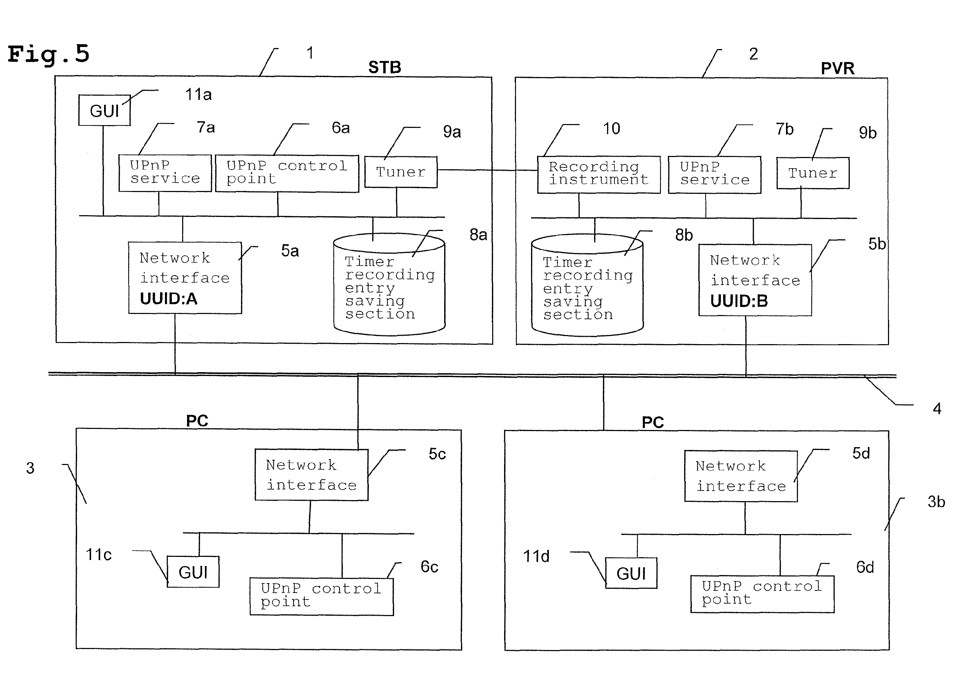

Figure 5 is a block of the timer recording system in accordance with Embodiment 3 of the present invention. The STB 1, PVR 2, and PC 3 are the same as those in accordance with Embodiments 1 and 2, described above, and will thus not be described. Reference numeral 3b denotes a PC, and reference numeral 5d constituting the PC 3b denotes a network interface. Reference numeral 6d denotes a UPnP control point, and reference numeral 11d denotes a GUI.

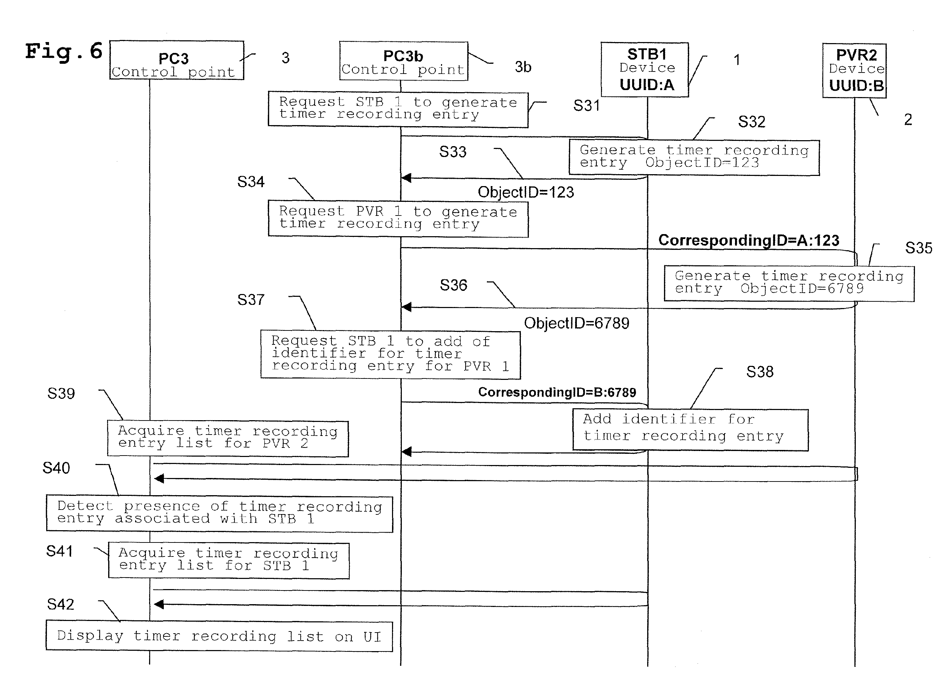

Thus, the operation of the present embodiment will be described with reference mainly to Figure 5 and Figure 6, a diagram illustrating the operation of the timer recording system in accordance with Embodiment 3 of the present invention.

The user is setting a certain broadcast program to be subjected to timer recording by operating the STB 1 and PVR 2 via the home network 4 while viewing the GUI 11a. Since this broadcast program is terrestrial digital, it cannot be recorded by means of the built-in tuner 9b in the PVR 2. Thus, the user decides to input reception outputs from the STB 1 to the PVR 2 for recording. The user programs the tuner 9a so that the STB 1 starts receiving the broadcast channel of the broadcast program at the time when broadcasting of the broadcast program is started. The reception outputs from the STB 1 are input to the PVR 2 during the broadcast time of the broadcast program. The recording instrument 10 then executes the timer recording.

An example of first timer recording information set for the STB 1 in accordance with the present embodiment is similar to that in accordance with Embodiment 1 (see Figure 10). A UPnP control point constituting the PC 3b requests the UPnP service 7a, constituting the STB 1, to generate a first timer recording entry corresponding to the first timer recording information to allow the UPnP service 7a to generate the first timer recording entry (step S31 in Figure 6).

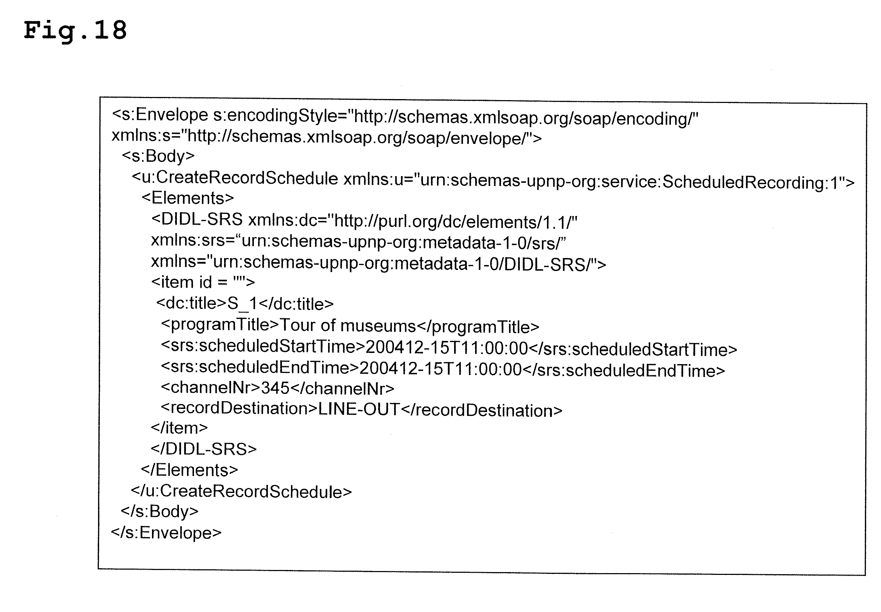

An example of the generation request is shown in Figure 18, a diagram illustrating a request for generation of a timer recording entry in the timer recording system in accordance with Embodiment 3 of the present invention. An XML document representing a first timer recording entry to be generated is stored in the argument for the SOAP action, which is transmitted to the PVR 2, as is the case with a create object SOAP action used for the above described contents directory service. For the actual storage in the argument, the XML escape is executed. However, to improve visibility, Figure 18 shows a form prior to the escape.

Upon receiving the generation request, the UPnP service 7a, constituting the STB 1, generates the first timer recording entry (step S32 in Figure 6). The present embodiment generates the first timer recording entry by adding an object ID to the XML document obtained through the SOAP action. As previously described, the object ID is unique within the service, and is illustrated as a number 123 in the present embodiment.

An example of the first timer recording entry generated in accordance with the present embodiment is similar to that in accordance with Embodiment 1, described above (see Figure 13). The first timer recording entry generated is saved to the timer recording entry saving section 8a, constituting the STB 1. The present embodiment illustrates the object ID, which is unique within the STB 1 and which is added to the first timer recording entry, as the number 123. The object ID has been described in detail in Embodiment 1 and will thus not be described.

After the generation is completed, the UPnP service 7a, constituting the STB 1, notifies the UPnP control point 6d, constituting the PC 3b, of completion of the generation (step S33 in Figure 6). The notification is executed through an SOAP action. A corresponding response contains the second timer recording entry generated.

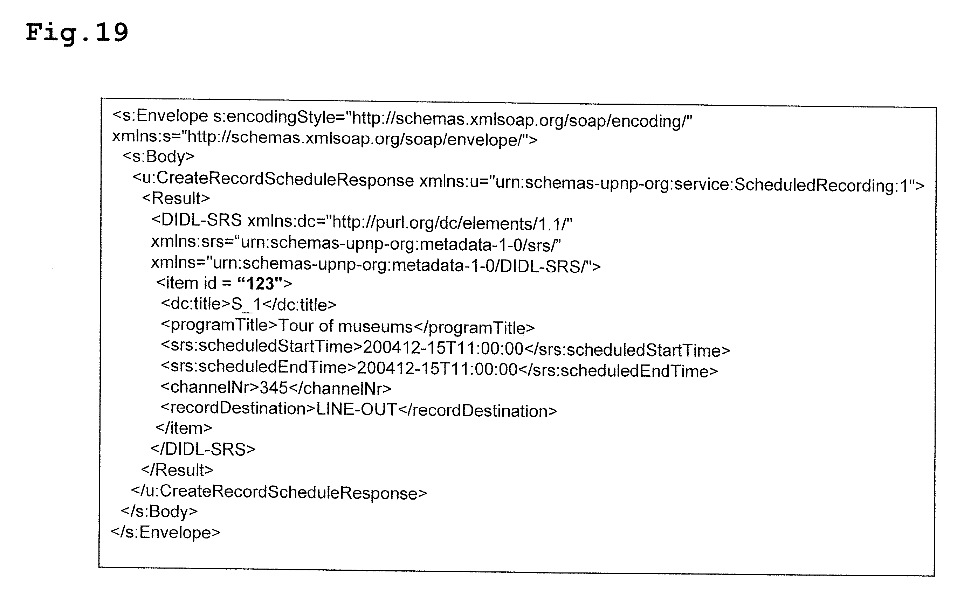

An example of the response is shown in Figure 19, a diagram of the response to the request for generation of a timer recording entry in the timer recording system in accordance with Embodiment 3 of the present invention.

Then, the UPnP control point 6d, constituting the PC 3b, requests the UPnP service 7b, constituting the PVR 2, to generate a second timer recording entry (step S34 in Figure 6).

An example of the timer recording information on which the second timer recording entry is based in accordance with the present invention is similar to that in accordance with Embodiment 1, described above (see Figure 11). The timer recording information shown in Figure 11 has the same time information as that in the timer recording information shown in Figure 10.

At the same time, from the object ID of the first timer recording entry, obtained at step S33 in Figure 6, and the UUID of the STB 1, A:123 is, as the first identifier, then transmitted to the PVR 2. The UUID has been described in detail in Embodiment 1 and will thus not be described.

An example of the generation request in accordance with the present embodiment is similar to that in accordance with Embodiment 1, described above (see Figure 12). An XML document representing a second timer recording entry to be generated is stored in the argument for the SOAP action, which is transmitted to the PVR 2, as is the case with the create object SOAP action used for the above described contents directory service. The part <correspondingID>A:123</correspondingID>, shown in boldface, is a tag for transmitting the first identifier.

Upon receiving the generation request, the UPnP service 7b, constituting the PVR 2, generates the second timer recording entry (step S35 in Figure 6). The present embodiment generates the second timer recording entry by adding the object ID to the XML document obtained through the SOAP action. The object ID is unique within the service as described above, and is illustrated as a number 6789 in the present embodiment.

An example of the second timer recording entry generated in accordance with the present embodiment is similar to that in accordance with Embodiment 1, described above (see Figure 13). The second timer recording entry contains the first identifier A:123. The second timer recording entry generated is saved to the timer recording entry saving section 8b, constituting the PVR 2.

After the generation is completed, the UPnP service 7b, constituting the PVR 2, notifies the UPnP control point 6a, constituting the PC 3b, of completion of the generation (step S36 in Figure 6). The notification is executed through an SOAP action. A corresponding response contains the second timer recording entry generated.

An example of the response in accordance with the present embodiment is similar to that in accordance with Embodiment 1, described above (see Figure 14).

After receiving the response shown in Figure 14, the UPnP control point 6d, constituting the PC 3b, makes a request for adding a second identifier to the first timer recording entry, controlled by the UPnP service 7a, constituting the STB 1 (step S37 in Figure 6).

The second identifier B:6789 is obtained by combining, via : (colon), B, the UUID of the PVR 2, and 6789, the object ID of the second timer recording entry generated for the UPnP service 7b, constituting the PVR 2.

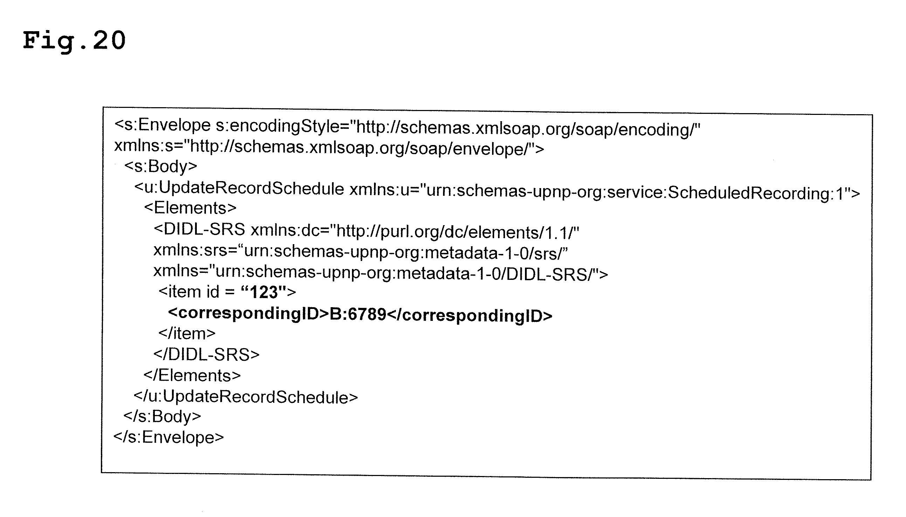

An example of the request for addition of an identifier is shown in Figure 20, a diagram illustrating the request for addition of an identifier to a timer recording entry in the timer recording system in accordance with Embodiment 3 of the present invention. An XML fragment for a tag to be added is stored in the argument for the SOAP action, which is transmitted to the STB 1, as is the case with an update object SOAP action used for the above described contents directory service. For the actual storage in the argument, the XML escape is executed. However, to improve visibility, Figure 20 shows a form prior to the escape. The part <correspondingID>B:6789</correspondingID>, shown in boldface, is a tag for transmitting the second identifier.

Upon receiving the generation request, the UPnP service 7a, constituting the STB 1, updates the first timer recording entry (step S38 in Figure 6). The present embodiment generates the updated first timer recording entry by adding the XML fragment obtained through the SOAP action to the second timer recording entry.

An example of the updated first timer recording entry in accordance with the present embodiment is similar to that in accordance with Embodiment 1, described above (see Figure 15). The first timer recording entry contains the second identifier B:6789. The first timer recording entry generated is saved to the timer recording entry saving section 8a, constituting the STB 1.

As described above, the first and second timer recording entries contain the second and first identifiers, respectively.

It is assumed that the user subsequently acquires a list of timer recording information for the PVR 2 from the PC 3 via the home network 4.

The user uses the UPnP control point 6c, constituting the PC 3, to acquire the list of timer recording entries for the UPnP service 7b, constituting the PVR 2 (step S39 in Figure 6).

An example of acquisition of the list of timer recording entries in accordance with the present embodiment is similar to that in accordance with Embodiment 1, described above (see Figure 16). As is the case with the response to the Browse SOAP action, used for the contents directly service as described above, a group of XML documents representing a group of timer recording entries controlled by the UPnP service 7b is stored in the argument for the SOAP action, which is returned to the UPnP control point 6c.

The UPnP control point 6c, constituting the PC 3, detects that the second timer recording entry, shown at 162, is associated with a timer recording entry for recording using the tuner 9a in the STB 1, having the UUID = A (step S40 in Figure 6).

The UPnP control point 6c, constituting the PC 3, acquires a list of timer recording entries for the STB 1 in order to acquire detailed information on the timer recording entry for the STB 1 which is associated with the second timer recording entry, shown at 162 (step S41 in Figure 6).

An example of acquisition of the list of timer recording entries in accordance with the present embodiment is similar to that in accordance with Embodiment 1, described above (see Figure 17).

The UPnP control point 6c, constituting the PC 3, detects that the first timer recording entry, shown at 171, is associated with the second timer recording entry on the PVR 2, having the UUID = B.

This enables the UPnP control point 6c, constituting the PC 3, to display a timer recording list such as the one shown in Figure 3 on the GUI 11c on the basis of the results of steps S39, S40, and S41 (step S42 in Figure 6).

The recording device in accordance with the present invention corresponds to the PVR 2. The recording control device in accordance with the present invention corresponds to the STB 1. The display device in accordance with the present invention corresponds to the PC 3. The timer recording display system in accordance with the present invention corresponds to the timer recording system in accordance with the present embodiment. The display instrument in accordance with the present invention corresponds to the UPnP control point 6c. The timer recording display device in accordance with the present invention corresponds to the PC 3. The setting device in accordance with the present invention corresponds to the PC 3b. (Embodiment 4)

Now, description will be given of the configuration and operation of a timer recording system in accordance with Embodiment 4.

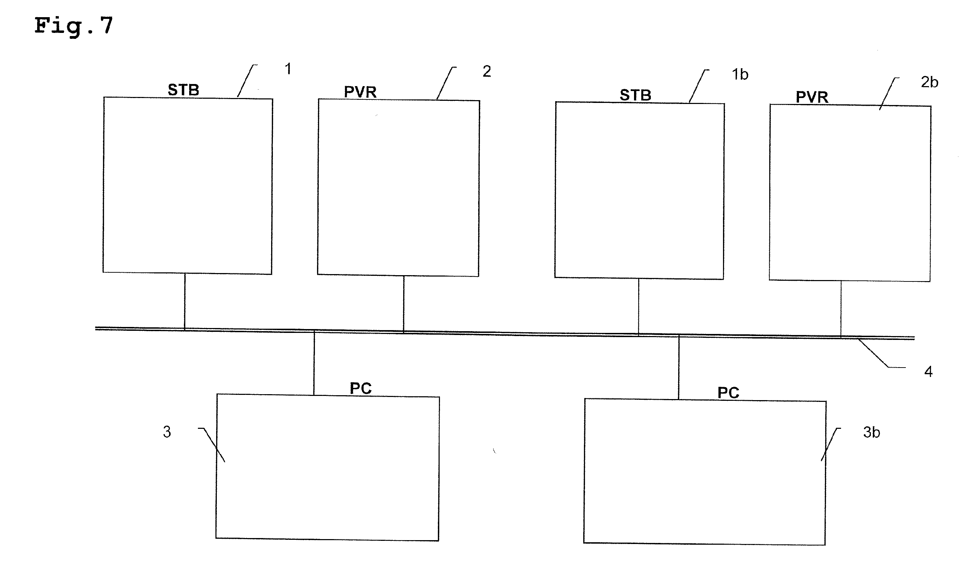

Figure 7 is a block diagram of a timer recording system in accordance with Embodiment 4 of the present invention. In the illustrated example, the user has a plurality of STBs and PVRs in his or her home, including the STB 1 and PVR 1, shown in Embodiments 1, 2, and 3, described above. Reference numeral 1 denotes an STB serving as a first appliance. Reference numeral 2 denotes a PVR serving as a second appliance and utilizing a hard disk. Reference numeral 3 denotes a PC, reference numeral 1b denotes an STB different from the STB 1, and reference numeral 2b denotes a PVR different from the PVR 2. Reference numeral 4 denotes a home network, and reference numeral 3b denotes a PC different from the PC 3. The components of each appliance are similar to those shown above in Embodiments 1, 2, and 3 and will thus not be described.

The steps executed before associated timer recording entries for each appliance contain the respective timer recording entry identifiers are also similar to those in Embodiments 1, 2, and 3, shown above, and will thus not be described. The point of the present embodiment is what the display of a timer recording list on the GUI is like after the timer recording entries have acquired the respective identifiers.

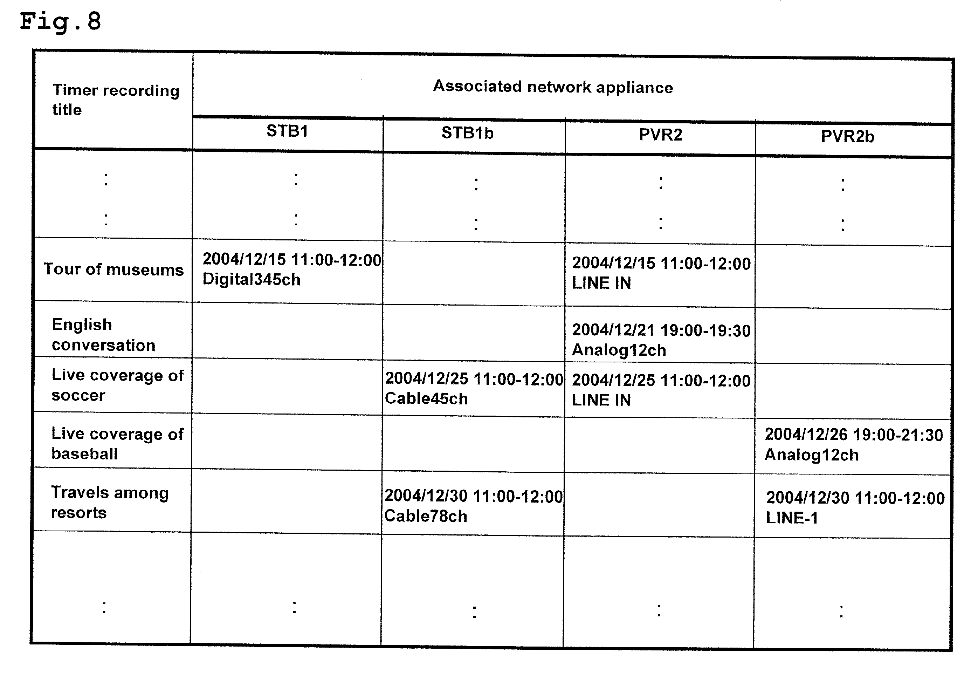

Thus, with reference mainly to Figure 8, a diagram illustrating the display of a timer recording list provided by the timer recording system in accordance with Embodiment 4 of the present invention, description will be given of operations preformed to display a timer recording list in accordance with the present embodiment.

In Figure 8, the STB 1, STB 1b, PVR 2, and PVR 2b coupled together by the home network 4 are arranged in a horizontal direction, with programs to be subjected to timer recording arranged in a vertical direction.

For example, the timer recording title "Tour of Museums" indicates that the STB 1 and the PVR 2 are to cooperate in timer recording. The timer recording title "English Conversation" indicates that the PVR 2 is to independently execute timer recording. The timer recording title "Live Coverage of Soccer" indicates that the STB 1b and the PVR 2 are to cooperate in timer recording. The timer recording title "Live Coverage of Baseball" indicates that the PVR 2b is to independently execute timer recording. The timer recording title "Travels among Resorts" indicates that the STB 1b and the PVR 2b are to cooperate in timer recording.

As describe above, the timer recording display method in accordance with Embodiment 4 enables the user to intuitively determine which of the home appliances are to cooperate in timer recording. The method thus enables the user to avoid mistakes in the cancellation or change of desired timer recording and is thus very useful in a practical sense.

The recording device in accordance with the present invention corresponds to the PVR 2 and the PVR 2b. The recording control device in accordance with the present invention corresponds to the STB 1 and the STB 1b. The display device in accordance with the present invention corresponds to the PC 3. The timer recording display system in accordance with the present invention corresponds to the timer recording system in accordance with the present embodiment. The display instrument in accordance with the present invention corresponds to the UPnP control point 6c. The timer recording display device in accordance with the present invention corresponds to the PC 3. The setting device in accordance with the present invention corresponds to the PC 3b.

### (Embodiment 5)

Now, description will be given of the configuration and operation of a timer recording system in accordance with Embodiment 5.

The configuration of the present embodiment is the same as that of Embodiment 4, described above, except for the manner of displaying a timer recording list based on information obtained.

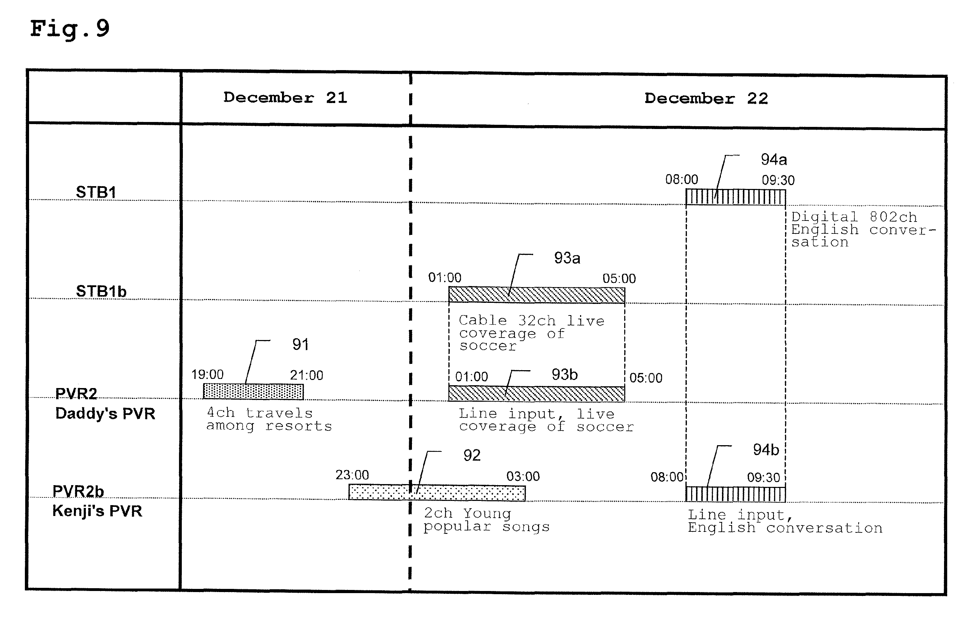

Thus, with reference mainly to Figure 9, a diagram illustrating the display of a timer recording list provided by the timer recording system in accordance with Embodiment 5 of the present invention, description will be given of operations preformed to display a timer recording list in accordance with the present embodiment.

In Figure 9, the STB 1, STB 1b, PVR 2, and PVR 2b coupled together by the home network 4 are arranged in the vertical direction, with times and dates displayed in the horizontal direction.

Timer recording entries for each appliance are each denoted by a horizontal bar the opposite ends of which indicate the recording start time and the recording end time.

Here, for associated timer recording entries, bars with the same color or design are used to visually indicate that the timer recording entries are associated with each other.

In Figure 9, for example, reference numeral 91 denotes a bar indicating the timer recording title "Travels among Resorts". The bar 91 indicates that the PVR 2 is to independently record the channel 4 from 19:00 to 21:00 on December 21 using its own tuner. Reference numerals 93a and 93b denote bars indicating the timer recording title "Live Coverage of Soccer". The bars 93a and 93b indicate that the PVR 2 is to record the cable tuner channel 32 from 01:00 to 05:00 on December 22 through line input.

Using tags for UPnP-defined user-friendly names for the appliances allows users to easily recognize the names. In the example of Figure 9, the PVR 2 is named "Daddy's PVR", and the PVR 2a is named "Kenji's PVR".

As described above, the timer recording display method in accordance with Embodiment 5 not only textually but also graphically indicate which of the home appliances are to cooperate in timer recording. The user can thus make intuitive and visual determinations. Even children or aged persons can reliably understand the cooperation among the appliances in timer recording. This timer recording display method is thus very useful in a practical sense.

Embodiments 1 to 5 have been described in detail.

Thus, the object to easily determine which of the home appliances are to cooperate in timer recording, via another appliance, can be very reliably accomplished with the minimum number of steps.

When applied to timer recording using a plurality of timer recording appliances coupled together via a home network, the present invention can be applied to the integrated display of mutually associated information on recorded contents by using the appliances for information (metadata) on recorded contents rather than for timer recording entries.

A program in accordance with the present invention allows a computer to perform the operations in all or some of the steps of the above timer recording display method in accordance with the present invention. The program operates in corporation with the computer.

A recording medium in accordance with the present invention carries a program allowing a computer to perform the operations in all or some of the steps of the above described timer recording display method in accordance with the present invention. The program can be read from the recording medium by the computer. The program read from the recording medium cooperates with the computer in performing the above operations.

The term "some of the steps" as used herein means one or more of the plurality of steps.

The term "operations in the steps" as used herein means the operations in all or some of the steps.

In a usage form of the program in accordance with the present invention, the program may be recorded in a computer readable recording medium and cooperate with the computer.

In a usage form of the program in accordance with the present invention, the program may be transmitted through a transmission medium and read by a computer, and cooperate with the computer.

The recording medium includes a ROM, and the transmission medium includes the Internet, light, electric waves, and sound waves.

The computer in accordance with the present invention is not limited to pure hardware such as a CPU, and may include firmware, an OS, and peripheral appliances.

As described above, the present invention may be configured as software or as hardware.

### Industrial Applicability

When a plurality of home network-compatible timer recording appliances are used for timer recording, for example, the timer recording display system, timer recording display device, timer recording display method, program, and recording medium in accordance with present invention allow the easy determination of which home appliances are to cooperate in the timer recording.

## Claims

1. A timer recording display system comprising:
one or more recording devices coupled to a predetermined network, the recording devices having respective unique recording device identifiers and each executing a timer recording of a program set in accordance with an external instruction;
one or more recording control devices coupled to the predetermined network, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device; and
a display device coupled to the predetermined network, the display device providing display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

2. The timer recording display system according to claim 1, wherein the display device utilizes the predetermined network to view at least the recording control device timer recording entry to provide the display.

3. The timer recording display system according to claim 1, wherein the recording control device identifier of the recording control device controlling the recording device, which executes the timer recording when the timer recording of the set program is executed and the timer recording information for executing the timer recording of the set program are communicated to the recording device executing the timer recording of the set program using the predetermined network, and
the recording device holds a recording device timer recording entry in a predetermined recording device timer recording entry memory, the recording device timer recording entry describing at least the communicated recording control device identifier of the recording control device controlling the recording device when the timer recording of the set program is executed and the communicated timer recording information for executing the timer recording of the set program.

4. The timer recording display system according to claim 3, wherein the display device utilizes the predetermined network to view at least the recording device timer recording entry to provide the display.

5. The timer recording display system according to claim 4, wherein the predetermined network allows UPnP to be used therein,
the recording device identifier is a UUID of the recording device,
the recording control device identifier is a UUID of the recording control device, and
an object ID for the recording device which is unique to the recording device and an object ID for the recording control device which is unique to the recording control device are assigned to the set program.

6. The timer recording display system according to claim 5, wherein after the UUID of the recording control device controlling the recording device, which executes the timer recording when the timer recording of the set program is executed, is communicated to the recording device executing the timer recording of the set program, together with the object ID for the recording control device assigned to the set program,
at the recording device, the recording device timer recording entry is generated by adding the communicated object ID for the recording control device, and
at the recording control device, the object ID for the recording device assigned to the set program is communicated, and the recording control device timer recording entry is generated by adding the communicated object ID for the recording device.

7. The timer recording display system according to claim 5, wherein before the UUID of the recording control device controlling the recording device, which executes the timer recording when the timer recording of the set program is executed, is communicated to the recording device executing the timer recording of the set program,
at the recording control device, the recording control device timer recording entry is once generated, and
after the UUID of the recording control device controlling the recording device, which executes the timer recording when the timer recording of the set program is executed, is communicated to the recording device executing the timer recording of the set program, together with the object ID for the recording control device assigned to the set program,
at the recording device, the recording device timer recording entry is generated by adding the communicated object ID for the recording control device, and
at the recording control device, the object ID for the recording device assigned to the set program is communicated, and the communicated object ID for the recording device is added to the recording control device timer recording entry once generated.

8. The timer recording display system according to claim 1, further comprising a setting device that sets the timer recording of the program in accordance with at least the external instruction.

9. The timer recording display system according to claim 1, wherein the display device utilizes a matrix table having both a coordinate for the recording device and the recording control device and a coordinate for the program, to provide the display.

10. The timer recording display system according to claim 1, wherein the timer recording information has data on a timer recording time during which the timer recording of the program is executed, and
the display device utilizes a bar graph on a coordinate plane having both a coordinate for the recording device and the recording control device and a coordinate for the timer recording time, to be displayed.

11. The timer recording display system according to claim 10, wherein the bar graph has bars shown in common colors and/or with common patterns for respective programs to be subjected to the timer recording, each of the bars having a length in a direction of the coordinate for the timer recording time.

12. A timer recording display device coupled to a predetermined network to which one or more recording devices and one or more recording control devices are coupled, the recording devices having respective unique recording device identifiers and each executing timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, the timer recording display device comprising a display instrument which provides display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

13. A timer recording display method comprising a display step of utilizing a predetermined network to which one or more recording devices and one or more recording control devices are coupled, the recording devices having respective unique recording device identifiers and each executing timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, to provide display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

14. A program for allowing a computer to execute the display step of the timer recording display method according to claim 13, the display step utilizing a predetermined network to which one or more recording devices and one or more recording control devices are coupled, the recording devices having respective unique recording device identifiers and each executing timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, to provide display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

15. A recording medium carrying the program according to claim 14, which can be processed by a computer.

## Amended claims

### Amended claims under Art. 19.1 PCT

**1.** (Amended) A timer recording display system comprising:
one or more recording devices coupled to a predetermined network, the recording devices having respective unique recording device identifiers and each executing a timer recording of a program set in accordance with an external instruction;
one or more recording control devices coupled to the predetermined network, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device; and
a display device coupled to the predetermined network, the display device providing display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program,
wherein the recording control device identifier of the recording control device controlling the recording device, which executes the timer recording when the timer recording of the set program is executed and the timer recording information for executing the timer recording of the set program are communicated to the recording device executing the timer recording of the set program using the predetermined network, and
the recording device holds a recording device timer recording entry in a predetermined recording device timer recording entry memory, the recording device timer recording entry describing at least the communicated recording control device identifier of the recording control device controlling the recording device when the timer recording of the set program is executed and the communicated timer recording information for executing the timer recording of the set program,
the predetermined network allows UPnP to be used therein,
the recording device identifier is a UUID of the recording device,
the recording control device identifier is a UUID of the recording control device, and
an object ID for the recording device which is unique to the recording device and an object ID for the recording control device which is unique to the recording control device are assigned to the set program,
after the UUID of the recording control device controlling the recording device, which executes the timer recording when the timer recording of the set program is executed, is communicated to the recording device executing the timer recording of the set program, together with the object ID for the recording control device assigned to the set program,
at the recording device, the recording device timer recording entry is generated by adding the communicated object ID for the recording control device, and
at the recording control device, the object ID for the recording device assigned to the set program is communicated, and the recording control device timer recording entry is generated by adding the communicated object ID for the recording device.

**2.** (Amended) A timer recording display system comprising:
one or more recording devices coupled to a predetermined network, the recording devices having respective unique recording device identifiers and each executing a timer recording of a program set in accordance with an external instruction;
one or more recording control devices coupled to the predetermined network, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device; and
a display device coupled to the predetermined network, the display device providing display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program,
wherein the recording control device identifier of the recording control device controlling the recording device, which executes the timer recording when the timer recording of the set program is executed and the timer recording information for executing the timer recording of the set program are communicated to the recording device executing the timer recording of the set program using the predetermined network, and
the recording device holds a recording device timer recording entry in a predetermined recording device timer recording entry memory, the recording device timer recording entry describing at least the communicated recording control device identifier of the recording control device controlling the recording device when the timer recording of the set program is executed and the communicated timer recording information for executing the timer recording of the set program,
the predetermined network allows UPnP to be used therein,
the recording device identifier is a UUID of the recording device,
the recording control device identifier is a UUID of the recording control device, and
an object ID for the recording device which is unique to the recording device and an object ID for the recording control device which is unique to the recording control device are assigned to the set program,
before the UUID of the recording control device controlling the recording device, which executes the timer recording when the timer recording of the set program is executed, is communicated to the recording device executing the timer recording of the set program,
at the recording control device, the recording control device timer recording entry is once generated, and
after the UUID of the recording control device controlling the recording device, which executes the timer recording when the timer recording of the set program is executed, is communicated to the recording device executing the timer recording of the set program, together with the object ID for the recording control device assigned to the set program,
at the recording device, the recording device timer recording entry is generated by adding the communicated object ID for the recording control device, and
at the recording control device, the object ID for the recording device assigned to the set program is communicated, and the communicated object ID for the recording device is added to the recording control device timer recording entry once generated.

**3.** (Amended) The timer recording display system according to claim 1 or 2, wherein the display device utilizes the predetermined network to view at least the recording control device timer recording entry to provide the display.

**4.** (Amended) The timer recording display system according to claim 1 or 2, wherein the display device utilizes the predetermined network to view at least the recording device timer recording entry to provide the display.

**5.** (Cancelled)

**6.** (Cancelled)

**7.** (Cancelled)

**8.** (Amended) The timer recording display system according to claim 1 or 2, further comprising a setting device that sets the timer recording of the program in accordance with at least the external instruction.

**9.** (Amended) The timer recording display system according to claim 1 or 2, wherein the display device utilizes a matrix table having both a coordinate for the recording device and the recording control device and a coordinate for the program, to provide the display.

**10.** (Amended) The timer recording display system according to claim 1 or 2, wherein the timer recording information has data on a timer recording time during which the timer recording of the program is executed, and
the display device utilizes a bar graph on a coordinate plane having both a coordinate for the recording device and the recording control device and a coordinate for the timer recording time, to be displayed.

**11.** The timer recording display system according to claim 10, wherein the bar graph has bars shown in common colors and/or with common patterns for respective programs to be subjected to the timer recording, each of the bars having a length in a direction of the coordinate for the timer recording time.

**12.** (Amended) A timer recording display device coupled to a predetermined network to which one or more recording devices and one or more recording control devices are coupled, the recording devices having respective unique recording device identifiers and each executing a timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, the timer recording display device comprising a display instrument which provides display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program,
wherein the recording control device identifier of the recording control device controlling the recording device, which executes the timer recording when the timer recording of the set program is executed and the timer recording information for executing the timer recording of the set program are communicated to the recording device executing the timer recording of the set program using the predetermined network, and
the recording device holds a recording device timer recording entry in a predetermined recording device timer recording entry memory, the recording device timer recording entry describing at least the communicated recording control device identifier of the recording control device controlling the recording device when the timer recording of the set program is executed and the communicated timer recording information for executing the timer recording of the set program,
the predetermined network allows UPnP to be used therein,
the recording device identifier is a UUID of the recording device,
the recording control device identifier is a UUID of the recording control device, and
an object ID for the recording device which is unique to the recording device and an object ID for the recording control device which is unique to the recording control device are assigned to the set program,
after the UUID of the recording control device controlling the recording device, which executes the timer recording when the timer recording of the set program is executed, is communicated to the recording device executing the timer recording of the set program, together with the object ID for the recording control device assigned to the set program,
at the recording device, the recording device timer recording entry is generated by adding the communicated object ID for the recording control device, and
at the recording control device, the object ID for the recording device assigned to the set program is communicated, and the recording control device timer recording entry is generated by adding the communicated object ID for the recording device.

**13.** (Amended) A timer recording display method comprising a display step of utilizing a predetermined network to which one or more recording devices and one or more recording control devices are coupled, the recording devices having respective unique recording device identifiers and each executing a timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, to provide display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program,
wherein the recording control device identifier of the recording control device controlling the recording device, which executes the timer recording when the timer recording of the set program is executed and the timer recording information for executing the timer recording of the set program are communicated to the recording device executing the timer recording of the set program using the predetermined network, and
the recording device holds a recording device timer recording entry in a predetermined recording device timer recording entry memory, the recording device timer recording entry describing at least the communicated recording control device identifier of the recording control device controlling the recording device when the timer recording of the set program is executed and the communicated timer recording information for executing the timer recording of the set program,
the predetermined network allows UPnP to be used therein,
the recording device identifier is a UUID of the recording device,
the recording control device identifier is a UUID of the recording control device, and
an object ID for the recording device which is unique to the recording device and an object ID for the recording control device which is unique to the recording control device are assigned to the set program,
after the UUID of the recording control device controlling the recording device, which executes the timer recording when the timer recording of the set program is executed, is communicated to the recording device executing the timer recording of the set program, together with the object ID for the recording control device assigned to the set program,
at the recording device, the recording device timer recording entry is generated by adding the communicated object ID for the recording control device, and
at the recording control device, the object ID for the recording device assigned to the set program is communicated, and the recording control device timer recording entry is generated by adding the communicated object ID for the recording device.

**14.** A program for allowing a computer to execute the display step of the timer recording display method according to claim 13, the display step utilizing a predetermined network to which one or more recording devices and one or more recording control devices are coupled, the recording devices having respective unique recording device identifiers and each executing a timer recording of a program set in accordance with an external instruction, the recording control devices having respective unique recording control device identifiers and each holding a recording control device timer recording entry in a predetermined recording control device timer recording entry memory, the recording control device timer recording entry describing at least the recording device identifier of the recording device controlled by the recording control device when the timer recording of the set program is executed and timer recording information for executing the timer recording of the set program, each of the recording control devices controlling the recording device on the basis of the recording control device timer recording entry held by the recording control device, to provide display for a combination of the recording device identifier of the recording device executing the timer recording of the set program, the recording control device identifier of the recording control device controlling the recording device, which executes the timer recording when the timer recording of the set program is executed, and the timer recording information for executing the timer recording of the set program.

**15.** A recording medium carrying the program according to claim 14, which can be processed by a computer.
